# EUROPÄISCHE PATENTSCHRIFT

(11) **EP 0 707 154 B1**
(45) Veröffentlichungstag und Bekanntmachung des Hinweises auf die Patenterteilung: **23.07.1997**
(21) Anmeldenummer: 95115690.0
(22) Anmeldetag: 05.10.1995
(51) Int. Cl.: F16B 37/14, F16B 39/10, F16D 1/06, B60B 7/00

(54) **Radhalterung für ein Kraftfahrzeug**
Wheel support for a motor vehicle
Support de roue pour véhicule automobile

(30) Priorität: 13.10.1994 DE 4436497
(43) Veröffentlichungstag der Anmeldung: 17.04.1996
(73) Patentinhaber: ADAM OPEL AG, 65423 Rüsselsheim (DE)
(72) Erfinder: Götz, Anton, D-65468 Trebur (DE)
(74) Vertreter: Bergerin, Ralf, Dipl.-Ing.

(56) Entgegenhaltungen:
- CH-A- 559 861
- DE-A- 4 119 174

## Beschreibung

Die Erfindung betrifft eine Radhalterung für ein Kraftfahrzeug, bei der eine mit einer Antriebswelle umlaufende, ein Rad tragende Bremsnabe vorgesehen und mittels einer Mutter auf einem Gewindeende der Antriebswelle befestigt ist, bei der die Mutter durch eine Sicherung auf dem Gewindeende gesichert ist und bei der eine mit der Bremsnabe und der Antriebswelle umlaufende Schutzkappe als Abdeckung für die Mutter und das Gewindeende dient. Eine Radhalterung ist bei angetriebenen Rädern heutiger Kraftfahrzeuge üblich und deshalb bekannt.

Bei solchen Radhalterungen erfolgt die erforderliche Sicherung der Mutter beispielsweise durch einen Splint, welcher nach dem Festziehen der Mutter in eine Bohrung des Wellenendes eingesetzt wird. Das bereitet beträchtlichen Montageaufwand. Auch andere, allgemein bekannte Mut-ternsicherungen bedingen hohen Kosten- und Montageaufwand. Hinzu kommt die Möglichkeit des Vergessens der Montage oder einer Fehlmontage einer solchen Sicherung, was nach dem Aufstecken der Schutzkappe nicht mehr zu erkennen ist. Weiterhin tritt durch solche Sicherungen meist eine Verringerung der Festigkeit der Gesamtanordnung ein. Wird für die Sicherung ein Splint verwendet, dann erfolgt durch die erforderliche Bohrung in dem Gewindeende der Antriebswelle eine Festigkeitsschwächung. Legt man zwischen die Mutter und den Halteflansch ein Sicherungsblech, dann ergibt sich eine zusätzliche Setzfuge, welche die Festigkeit verringert.

Der Erfindung liegt das Problem zugrunde, eine Radhalterung der eingangs genannten Art derart zu gestalten, daß die Sicherung ihrer Mutter möglichst kostengünstig, einfach und zuverlässig erfolgt und nicht unbemerkt vergessen werden kann. Weiterhin soll durch die Sicherung die Festigkeit der Anordnung nicht verringert werden.

Dieses Problem wird erfindungsgemäß dadurch gelöst, daß die Sicherung als an der Schutzkappe befestigtes, beim Aufschieben der Schutzkappe formschlüssig über die Außenkontur der Mutter greifendes Sicherungsblech ausgebildet ist.

Durch diese Gestaltung erfolgt beim Aufschieben der Schutzkappe eine zwangsläufige Sicherung der Mutter auf dem Gewindeende der Antriebswelle. Deshalb kann das Sichern der Mutter nicht vergessen werden. Erkennt man bei einer Überprüfung, daß die Schutzkappe montiert ist, dann muß zugleich auch die Sicherung der Mutter erfolgt sein. Abgesehen von diesem Sicherheitsvorteil bietet die erfindungsgemäße Sicherung der Mutter den Vorteil, daß durch sie keine Schwächung von Bauteilen eintritt. Ein Kostenvorteil ergibt sich daraus, daß dank der Erfindung sich durch die Integration der Sicherung in die Schutzkappe die Anzahl der zu montierenden Teile verringert.

Der Montagevereinfachung dient es, wenn gemäß einer anderen Weiterbildung der Erfindung das Sicherungsblech das offene Ende der Schutzkappe überragt. Dadurch wird es bei der Montage einfacher, das Sicherungsblech in eine außenseitig zur Mutter liegende Position zu bringen.

Das Sicherungsblech greift beim Aufschieben der Schutzkappe über die Mutter, bevor die Schutzkappe in die sie haltende Bohrung der Bremsnabe gelangt, wenn gemäß einer anderen Weiterbildung der Erfindung die Länge des die Schutzkappe überragenden Bereichs des Sicherungsbleches größer ist als der Abstand von der äußeren Stirnfläche der Bremsnabe zur Oberkante der Radmutter.

Die Sicherung der Mutter verlangt keine Fertigungstoleranzen, wenn das Sicherungsblech aus Federstahl besteht und im montierten Zustand mit Vorspannung gegen die Mutter anliegt. Man kann dann beim Aufschieben der Schutzkappe das Sicherungsblech so weit elastisch nach außen biegen, daß es beim Aufschieben der Schutzkappe über die Außenkontur der Mutter gelangt.

Eine besonders gute Mutternsicherung ergibt sich, wenn gemäß einer Weiterbildung der Erfindung einander gegenüberliegend zwei Sicherungsbleche an der Innenseite der Schutzkappe befestigt sind.

Als besonders vorteilhaft erweist sich ein Preßsitz für die Verbindung zwischen Schutzkappe und Bremsnabe, da dann keine zusätzliche Fixierung der Schutzkappe erforderlich wird.

Die Eindringtiefe der Schutzkappe in die Bohrung der Bremsnabe wird auf einfache Weise begrenzt, so daß auch das Sicherungsblech oder die Sicherungsbleche zwangsläufig die richtige Position einnehmen, wenn die Schutzkappe einen nach außen gerichteten, umlaufenden Bördelflansch hat, welcher bei montierter Schutzkappe gegen die äußere Stirnfläche der Bremsnabe anliegt.

Zur weiteren Verdeutlichung des Grundprinzips der Erfindung ist in der Zeichnung ein Ausführungsbeispiel dargestellt, welches nachfolgend beschrieben wird. In ihr zeigt die
- Fig. 1:: einen Längsschnitt durch eine erfindungsgemäße Radhalterung;
- Fig. 2:: die Radhalterung nach Figur 1 während der Montage ihrer Schutzkappe.

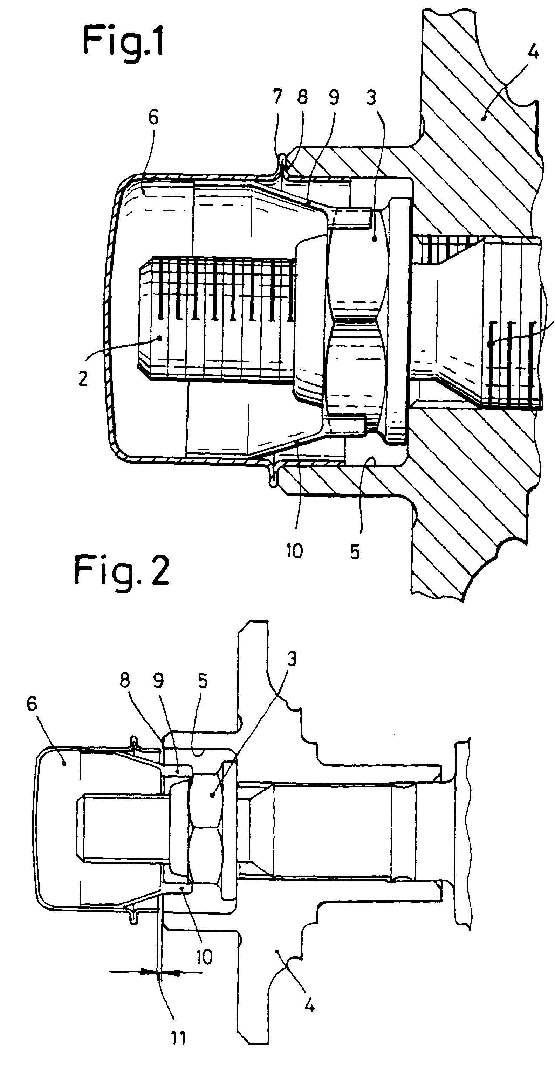

Die Figur 1 zeigt eine Antriebswelle 1, welche ein Gewindeende 2 hat, auf das eine Mutter 3 geschraubt ist, welche eine als Scheibenbremsnabe ausgebildete Bremsnabe 4 axial fixiert. Die Mutter 3 wird von einer koaxialen Bohrung 5 der Bremsnabe 4 aufgenommen, durch die das Gewindeende 2 führt.

In diese Bohrung 5 ist von außen her eine Schutzkappe 6 mit Preßsitz eingeschoben, welche im montierten Zustand mit einem Bördelflansch 7 auf einer äußeren Stirnfläche 8 der Bremsnabe 4 aufsitzt.

Wichtig für die Erfindung sind zwei an der Innenmantelfläche der Schutzkappe 6 durch Punktschweißen befestigte Sicherungsbleche 9, 10, die mit ihren freien Enden gegen die Außenkontur der Mutter 3 anliegen und diese dadurch vor Verdrehen sichern. Deutlich ist in Figur 1 zu erkennen, daß die Form der Sicherungsbleche 9, 10 im Bereich der Mutter 3 dieser angepaßt bzw. zu ihr komplementär ausgebildet ist. Weiterhin läßt Figur 1 erkennen, daß die Sicherungsbleche 9, 10 tiefer in die Bohrung 5 hineinragen als die Mantelfläche der Schutzkappe 6.

Das Prinzip der Vorzentrierung der Schutzkappe 6 wird in Figur 2 verdeutlicht. Besonders wichtig ist an dieser Darstellung, daß die Sicherungsbleche 9, 10 bereits an der Mutter anliegen, bevor die Schutzkappe 6 in die Bohrung 5 eingreift, es muß also zu diesem Zeitpunkt noch ein Spalt 11 zwischen der äußeren Stirnfläche 8 der Bremsnabe 4 und der ihr zugewandten Vorderkante der Schutzkappe 6 vorhanden sein.

## Patentansprüche

1. Radhalterung für ein Kraftfahrzeug, bei der eine mit einer Antriebswelle umlaufende, ein Rad tragende Bremsnabe vorgesehen und mittels einer Mutter auf einem Gewindeende der Antriebswelle befestigt ist, bei der die Mutter durch eine Sicherung auf dem Gewindeende gesichert ist und bei der eine mit der Bremsnabe und der Antriebswelle umlaufende Schutzkappe als Abdeckung für die Mutter und das Gewindeende dient, **dadurch gekennzeichnet**, daß die Sicherung als an der Schutzkappe (6) befestigtes, beim Aufschieben der Schutzkappe (6) formschlüssig über die Außenkontur der Mutter (3) greifendes Sicherungsblech (9, 10) ausgebildet ist.

2. Radhalterung nach Anspruch 1, **dadurch gekennzeichnet**, daß das Sicherungsblech (9, 10) das offene Ende der Schutzkappe (6) überragt.

3. Radhalterung nach Anspruch 2, **dadurch gekennzeichnet**, daß die Länge des die Schutzkappe (6) überragenden Bereichs des Sicherungsbleches (9, 10) größer ist als der Abstand von der äußeren Stirnfläche (8) der Bremsnabe (4) zur Oberkante der Radmutter (3).

4. Radhalterung nach zumindest einem der vorangehenden Ansprüche, **dadurch gekennzeichnet**, daß das Sicherungsblech (9, 10) aus Federstahl besteht und im montierten Zustand mit Vorspannung gegen die Mutter (3) anliegt.

5. Radhalterung nach zumindest einem der vorangehenden Ansprüche, **dadurch gekennzeichnet**, daß einander gegenüberliegend zwei Sicherungsbleche (9, 10) an der Innenseite der Schutzkappe (6) befestigt sind.

6. Radhalterung nach zumindest einem der vorangehenden Ansprüche, **dadurch gekennzeichnet**, daß die Schutzkappe (6) durch einen Preßsitz in einer koaxialen Bohrung (5) der Bremsnabe (4) gehalten ist.

7. Radhalterung nach zumindest einem der vorangehenden Ansprüche, **dadurch gekennzeichnet**, daß die Schutzkappe (6) einen nach außen gerichteten, umlaufenden Bördelflansch (7) hat, welcher bei montierter Schutzkappe (6) gegen die äußere Stirnfläche (8) der Bremsnabe (4) anliegt.

## Claims

1. Wheel support for a motor vehicle, in which a brake hub rotating with a drive shaft and carrying a wheel is provided and mounted on a threaded end of the drive shaft by means of a nut, in which the nut is locked by a locking system on the threaded end and in which a protective cap rotating with the brake hub and drive shaft serves as a cover for the nut and threaded end, characterised in that the locking system is constructed as a locking plate (9, 10) attached to the protective cap (6) and engaging over the outer contour of the nut (3) in form-locking relationship when the protective cap (6) is fitted on.

2. Wheel support according to claim 1, characterised in that the locking plate (9, 10) projects beyond the open end of the protective cap (6).

3. Wheel support according to claim 2, characterised in that the length of the region of the locking plate (9, 10) projecting beyond the protective cap (6) is greater than the distance from the outer end face (8) of the brake hub (4) to the upper edge of the wheel nut (3).

4. Wheel support according to one or more of the preceding claims, characterised in that the locking plate (9, 10) is made of spring steel and in the assembled state abuts with initial tension against the nut (3).

5. Wheel support according to one or more of the preceding claims, characterised in that opposite each other two locking plates (9, 10) are attached to the inside of the protective cap (6).

6. Wheel support according to one or more of the preceding claims, characterised in that the protective cap (6) is held by a force fit in a coaxial bore (5) of the brake hub (4).

7. Wheel support according to one or more of the preceding claims, characterised in that the protective cap (6) has an outwardly directed peripheral crimped flange (7) which when the cap (6) is assembled abuts against the outer end face (8) of the brake hub (4).

## Revendications

1. Fixation de roue pour un véhicule automobile, dans laquelle il est prévu un moyeu de frein qui porte une roue et tourne avec un arbre moteur, et est fixé au moyen d'un écrou sur une extrémité filetée de l'arbre moteur, dans laquelle l'écrou est freiné sur l'extrémité filetée à l'aide d'un moyen de freinage et dans laquelle une coiffe qui tourne avec le moyeu et l'arbre moteur sert de protection pour l'écrou et pour l'extrémité filetée, caractérisée par le fait que le moyen de freinage est réalisé sous la forme d'une tôle de freinage (9, 10) fixée à la coiffe (6), qui vient en prise par complémentarité de formes avec le contour extérieur de l'écrou lors de la mise en place de la coiffe (6).

2. Fixation de roue selon la revendication 1, caractérisée par le fait que la tôle de freinage (9, 10) dépasse par rapport à l'extrémité ouverte de la coiffe (6).

3. Fixation de roue selon la revendication 2, caractérisée par le fait que la longueur de la partie de la tôle de freinage (9, 10) qui dépasse par rapport à la coiffe (6) est supérieure à la distance entre la surface frontale (8) extérieure du moyeu de frein (4) et l'arête supérieure de l'écrou de roue (3).

4. Fixation de roue selon au moins une des revendications précédentes, caractérisée par le fait que la tôle de freinage (9, 10) est en acier à ressort et, à l'état monté, est appliquée avec précontrainte contre l'écrou (3).

5. Fixation de roue selon au moins une des revendications précédentes, caractérisée par le fait que deux tôles de freinage (9, 10) sont fixées mutuellement en vis-à-vis sur le côté intérieur de la coiffe (6).

6. Fixation de roue selon au moins une des revendications précédentes, caractérisée par le fait que la coiffe (6) est fixée par ajustement serré dans un trou (5) coaxial du moyeu de roue (4)

7. Fixation de roue selon au moins une des revendications précédentes, caractérisée par,le fait que la coiffe (6) comporte un bord roulé (7) continu dirigé vers l'extérieur qui; lorsque la coiffe (6) est montée, vient en contact avec la face frontale (8) extérieure du moyeu de frein (4).
